# EUROPEAN PATENT APPLICATION

(11) **EP 1 737 197 A1**
(43) Date of publication of application: **27.12.2006**
(21) Application number: 06252831.0
(22) Date of filing: 01.06.2006
(51) Int. Cl.: H04M 1/247, H04M 1/725

(54) **Mobile communications device for text based messaging over a mobile communications network and a method of using the same**

(30) Priority: 01.06.2005 US 142221
(71) Applicant: Agere Systems, Inc., Allentown, PA 18109 (US)
(72) Inventor: Goris, Norman, Dortmund 44319 (DE); Scheit, Wolfgang, Sauerlach/Lochofen 82054 (DE)
(74) Representative: Williams, David John

(57) **Abstract**

To enable hearing or speech impaired persons to transmit text over a mobile communications device, the invention provides for a mobile communication device with a text input means and an integrated cellular text modem (CTM) that has (i) a transmitter for converting input text data into CTM signals transmittable over a speech channel of a mobile communication network; and (ii) a receiver to convert received CTM signals into received text and display such received text on a display means integrated into the mobile communications device.

## Description

### TECHNICAL FIELD OF THE INVENTION

The present invention is directed, in general, to a telecommunications device and, more specifically, to a text based communications device for transmitting text via a speech channel of a mobile communication network for hearing or speech impaired persons.

### BACKGROUND OF THE INVENTION

Special telecommunication devices are available for hearing or speech-impaired persons. The first of these devices, originally called a TTY terminal, is a kind of teletypewriter that is still in common use. Synonymous terms are a telecommunication device for the deaf (TDD) or simply a text telephone.

The standard TTY terminal typically has a keyboard and a display. In operation it is similar to a conventional telephone network much like the public switched telecommunication network (PSTN). The TTY terminal converts key strokes into frequency shift keying (FSK) tones that are transmitted over the telephone network to a receiving TTY terminal, where the tones are converted back to characters and displayed.

For text communication with a person who is not provided with a TTY terminal and who is mobile, a TTY messaging method is described in U.S. Patent Application No. 20030210767, entitled TTY MESSAGING, to Lund, Arnold M., wherein a text message generated by a TTY terminal connected to the PSTN or plain old telephone system (POTS) is electronically converted to a pager format, sent to a pager and displayed. The user of the pager can then communicate with the user of the TTY terminal with another communication device, such as a standard telephone. In Lund the user of the pager composes a character-by-character message on the touch-tone keypad of the standard telephone, which can be sent to the user's pager for verification purposes prior to transmission. Alternatively, a speech recognition means can be provided by the telephone network. The obvious drawback to the method described in Lund is the necessity for the user of the pager to find a standard telephone in order to answer or respond to a received message.

A telecommunication system is also disclosed in Lund for communications between hearing impaired persons and emergency service centers. The disclosed embodiment provides for a hearing impaired person to be provided with a communications system that has a TTY terminal connected to a mobile phone by a supplementary connector similar to that used for accessories such as hands-free headsets. The mobile phone is connected to a cellular network which is, in turn, connected to a conventional telephone network. The emergency service center also has a TTY terminal connected to the conventional telephone network by a standard phone line. The systems described in Lund provide for the transmission of FSK modulated signals of a TTY terminal over the speech channel of a cellular communication network.

The disadvantage of the systems in Lund, however, is that channel encoders and decoders of cellular networks working in accordance with GSM or UMTS standards distort the FSK modulated signals generated by TTY devices and result in a high error rate. Because strict standards regarding signal level output of TTY terminals do not exist, additional distortion and false character detection can occur because due to signal-level variations. Furthermore, the system described in Lund requires a hearing impaired user to carry a TTY terminal in addition to a mobile phone, which greatly reduces mobility.

Accordingly, what is needed in the art is an improved approach for text transmission over mobile communications networks, especially over the speech channel of a cellular network, that can solve or minimize some or all of the problems described above.

### SUMMARY OF THE INVENTION

To address the above-discussed deficiencies of the prior art, the present invention provides for a mobile communications device for text transmittal that, in one embodiment, is comprised of (1) a text input means coupled to the mobile communications device; and (2) a cellular text modem (CTM), integrated into the mobile communications device, that includes (i) a transmitter adapted to convert input text into CTM signals transmittable over a speech channel of a mobile communications network; and (ii) a receiver adapted to convert received CTM signals into received text and display it on a display means.

The present invention thus provides for integrating a text modem with a mobile communications device to enable the cellular transmission of text via a mobile communication network on essentially an error-free basis. The present invention overcomes the mobility problem of mobile communications users who are hearing and speech impaired, as well as providing such users access to, and increased connectivity with, the rapidly growing mobile wireless environment.

In one embodiment, the communications device provides for text input by a keypad or keyboard integrated into the mobile communications device. In another embodiment, text is input by an external keyboard connected to the mobile communications device through an interface. Another embodiment provides for a mobile communications device with an integrated cellular text modem (CTM) that complies with standard 3GPP TS 26.226, Release 5.

The present invention also provides for an embodiment that includes a coding means for character coding of text data. As aspect of this embodiment provides for a coding means adapted to convert characters into text telephone code. A further aspect provides for the text telephone code to be Baudot code. In one embodiment, the mobile communications device coding means is adapted to convert characters of text telephone code into characters displayable on the display. An aspect of such embodiment is that the text telephone code is Baudot code. In still another embodiment, the mobile communications device provides for displaying input text on a first area and received text on a second area of a display.

The present invention also provides for a communications system comprised of, in one embodiment, (1) a mobile communications device with a cellular text modem (CTM) integrated therein, where the CTM includes (i) a transmitter adapted to convert input text data into CTM signals transmittable over a speech channel and (ii) a receiver adapted to convert received CTM signals into received text for display on a display means; and (2) a mobile communications network, connectable to a public switched telephone network (PSTN), coupled to a converter for converting CTM signals into FSK modulated signals processable by a standard text telephone terminal (TTY).

Another embodiment provides for a method of transmitting text over a speech channel of a mobile communications network, comprised of (1) using an input means integrated in a mobile communications device to input text data; (2) causing a cellular text modem (CTM) integrated in the mobile communications device to convert the text data into CTM signals; and (3) transmitting the CTM signals over the speech channel. An embodiment of the method provides for transmitting in the analog domain while another embodiment provides for CTM signals to be coded in pulse code modulation (PCM) samples.

An embodiment of the method further provides for converting input characters into text telephone code. An aspect of this embodiment provides for the text telephone code to be Baudot code. Yet still another embodiment of the method provides for receiving and converting CTM signals into received text and displaying the received text on a display integrated into the mobile communications device. An aspect of this embodiment provides for input text to be displayed on a first area of the display with received text displayed on a second area.

The invention also provides an embodiment of a mobile communications system control device that has a digital control storage medium containing electronically readable control instructions, embodied in a sequence of software instructions, to enable a mobile communications device with a cellular text modem (CTM) to convert text data into CTM signals for transmission over a speech channel and convert received CTM signals into received text. The storage device also includes a storage medium with electronically readable execution instructions embodied in a sequence of software instructions to enable the control instructions in a mobile communications system. An aspect of this embodiment provides for the storage medium to be a microchip.

The foregoing has outlined preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention.

### BRIEF DESCRIPTION OF THE DRAWINGS

For a more complete understanding of the invention, reference is now made to the following descriptions taken in conjunction with the accompanying drawing, in which:
FIGURE 1 illustrates a block diagram of a communications device constructed in accordance with the present invention;
FIGURE 2a illustrates a depiction of a communications system constructed in accordance with the present invention;
FIGURE 2b illustrates a flow chart of another embodiment of a communications system constructed in accordance with the present invention; and
FIGURE 3 illustrates a plan frontal view of an embodiment of a mobile communications device constructed in accordance with the present invention.

### DETAILED DESCRIPTION

Before describing the FIGUREs directly, various aspects, embodiments and features of the present invention will be described. Accordingly, the present invention proposes a mobile communication device with a text input means, an integrated display, and an integrated cellular text modem (CTM). The CTM has a transmitter adapted to convert input text into CTM signals transmittable over a speech channel of a mobile communications network and a receiver adapted to convert received CTM signals into received text. The airlink transport of CTM signals over GSM networks has been standardized in 3GPP TS 26.226, Release 5.

The present invention provides for a mobile communications device, which can be a mobile phone, PDA or MDA as well as a pocket or tablet computer that is provided with a wireless communication means. By integrating a CTM that complies with the above stated standard, data transmission over a mobile communication network is essentially error-free. The mobile communications device can be used for transmitting text messages to a standard TTY terminal connected to the PSTN, when an appropriate connection, compliant with the above standard, is provided between the mobile communications network and the PSTN.

The invention described herein beneficially enables increased mobility on the part of hearing and speech impaired users by integrating the text input means and the output means in the mobile communications device. In one embodiment of the invention, the text data input means is an integrated keypad or keyboard. However, because most mobile communications devices are provided with very small keypads or keyboards, the present invention also permits a larger external keyboard to be used with the device by providing an interface to connect an external keyboard to the device. With small foldable keyboards readily available, this means that mobility need not be substantially reduced when utilizing an external keyboard.

Since TTY terminals use special character coding schemes, particularly the Baudot code in North America, one embodiment of the invention provides for the device to include a coding means for character coding of text data and vice versa. This coding means can be implemented on the device's keypad or keyboard. The coding means can also convert characters of text data in telephone code, such as Baudot code, into characters that can be displayed on the device. Text telephone code, including Baudot code, is described in ITU-T Recommendation V.18, "Operational and Interworking Requirements for DCEs Operating in the Text Telephone Mode", November 2000.

In one embodiment, the integrated display is split into two areas, one for outgoing and one for incoming messages. That is, input text sent by a user is displayed in one area of the display and received text is displayed in a second area. This permits a user to keep track of a complete conversation and enhances the convenience of the device.

For transmission of text messages utilizing CTM signals according to 3GPP TS 26.226, Release 5, a compliant interworking function is required within the mobile communication network. Therefore, a communications system with a mobile communications network, that includes at least one mobile communications device and conforms to the above description, which is connected to a public switched telephone network (PSTN) is within the intended scope of the present invention. To facilitate this, an embodiment is provided with a signal adaptation device for converting CTM signals into FSK modulated signals that are processable by a standard text telephone terminal connected to the PSTN.

One method of transmitting text over a speech channel of a mobile communication network provides for (i) input text data to be input with a text input means connected to, or integral with, a mobile communications device; (ii) using a cellular text modem to convert input text data into CTM signals by means of a CTM transmitter; and (iii) transmitting the CTM signals over the speech channel of the mobile communication network. Because the mobile communication network is, most probably, a GSM or UMTS network, the transmission of CTM signals can be either analog or by way of coded PCM samples. Also, as previously indicated, the method can include the encoding of characters into text telephone code, in particular Baudot code.

For reception of text messages, the method includes (i) receiving CTM signals over the audio channel of the mobile communication network; (ii) converting the received CTM signals into received text; and (iii) displaying the received text on a display integrated into the device. In one embodiment, the method further includes decoding characters of received text, coded in text telephone code such as Baudot code, into characters displayable on the integrated display. The method includes the display of input text on a first area of the device's integrated display and received text on a second area of the display. This helps a user to keep track of the complete text of a conversation and also resembles the typical Internet chat room a lot of people are accustomed to. This gives the present method a distinct advantage over other mobile communications device text conversation methods, such as short messaging service (SMS), which typically does not provide for the simultaneous viewing of incoming and outgoing messages.

A particularly useful feature of the present invention is that it can be implemented by software. Accordingly, one embodiment of the invention provides for a digital storage medium, such as a microchip, that has electronically readable control instructions adapted to execute, when associated with a mobile communications device, the methods described herein.

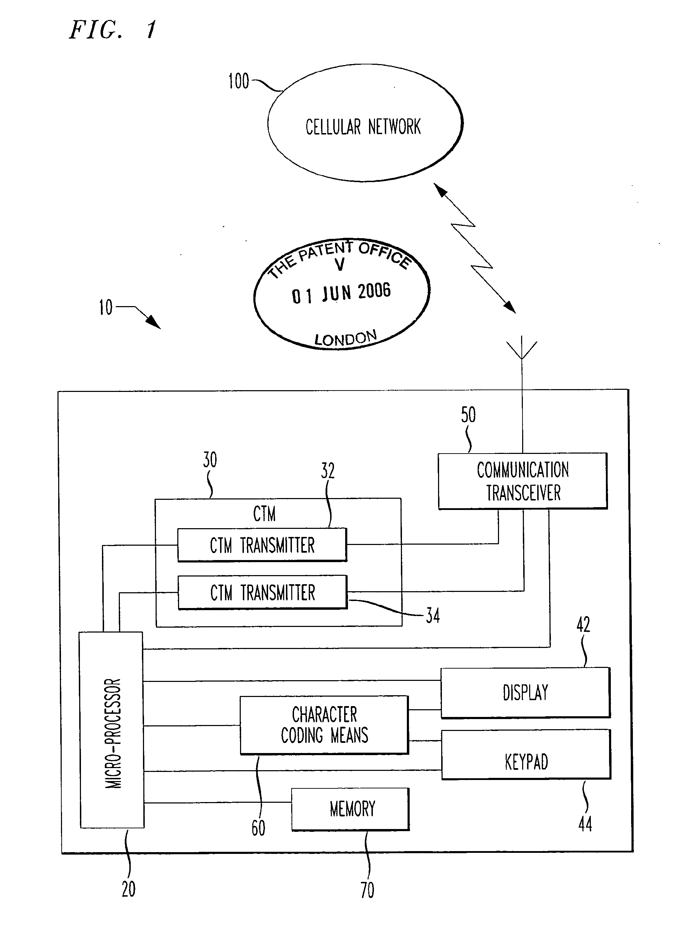

Turning now to the FIGUREs, the invention will be described in more detail. Initially referring to FIGURE 1, illustrated is a block diagram of a communications device 10 constructed in accordance with the present invention. Shown are the components of one embodiment of the device 10, which is controlled by a microprocessor 20 that executes operating software stored in the memory unit 70. To obtain reliable transmission of text over the speech channel of a cellular network 100, the device 10 is provided with a cellular text telephone modem (CTM) 30 that has a CTM transmitter 32 and a CTM receiver 34. The CTM transmitter 32 transforms input text data characters into a CTM signal that can be robustly transmitted over the speech channel radio transmission path of the cellular network 100. A corresponding CTM receiver 34 decodes a received CTM signal into received text characters. The CTM signals are audio signals, which means they can be either analog or signals coded into PCM samples. Therefore, there is no requirement to integrate the speech encoder or decoder (not shown) of the device 10 into the CTM 30. The transmission of a signal to the cellular network 100 is performed by a communications transceiver 50. The illustrated device 10 is also provided with an integrated text conversation user interface made up of a display 42 and a keypad 44. For the purpose of encoding and decoding characters according to text telephone character coding schemes, in particular Baudot coding, the device 10 is provided with a character coding means 60. Appropriate mapping parameters can be stored in the memory unit 70.

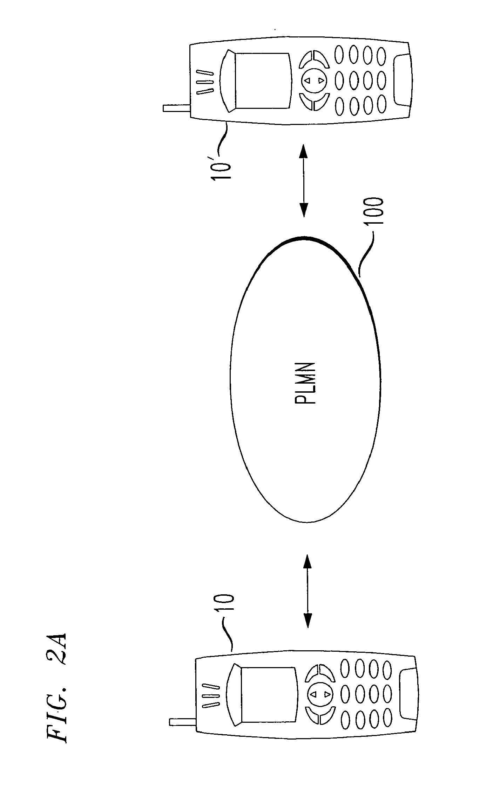

FIGURE 2a illustrates a depiction of a communications system constructed in accordance with the present invention. Shown is a communications system made up of similar first and second mobile communication devices 10, 10', each of which is constructed in accordance with the present invention. The two mobile communication devices 10, 10' are connected by a cellular network (PLMN) 100. Data is exchanged over the radio interface using CTM signals generated by the integrated CTM transmitter in the device at one end and processed by the corresponding integrated CTM receiver in the device at the other end.

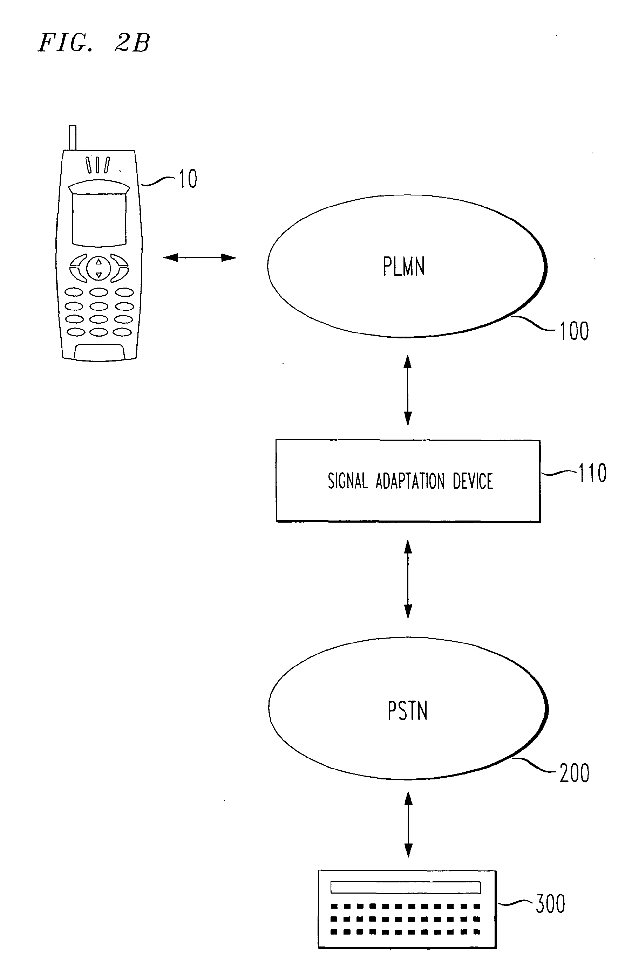

FIGURE 2b illustrates a flow chart and depiction of another embodiment of a communications system constructed in accordance with the present invention. Shown is an embodiment in which one side is provided with a traditional text telephone or TTY terminal 300 connected to the PSTN 200. Because FSK modulated signals used over the PSTN for TTY message transport differ from the CTM signals, a function allowing the conversion of FSK modulation signals to CTM signals, and vice versa, is required. Thus, the illustrated system is provided with a signal adaptation device 110, associated with the mobile communication network (PLMN) 100 and connected to the PSTN 200, to perform the necessary signal transformation.

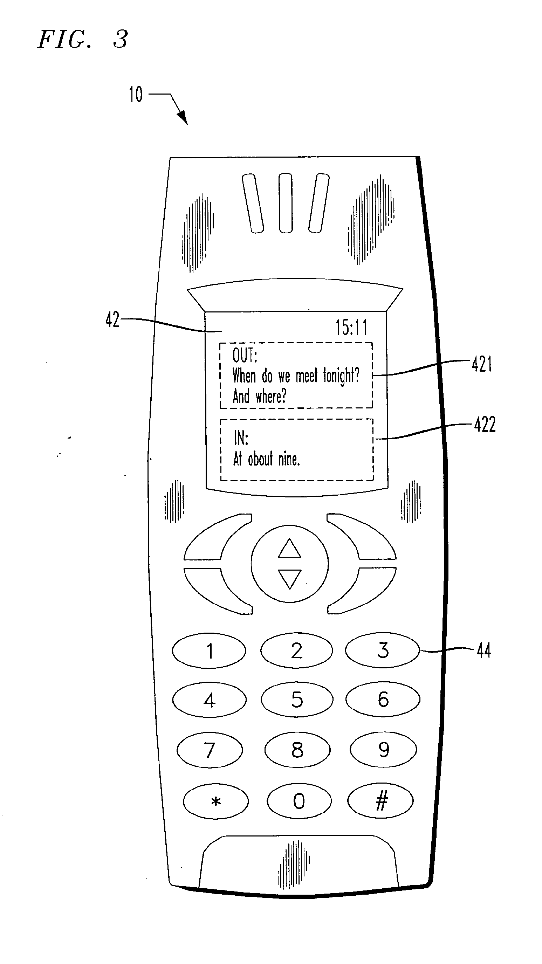

FIGURE 3 illustrates a plan frontal view of an embodiment of a mobile communications device constructed in accordance with the present invention. The illustrated embodiment has an integrated display 42. Input text data is input 10 by a user with the keypad 44 and is displayed in a first area 421 of the display 42 prior to transmission over the cellular network 100. This gives a user the opportunity to review a text message and correct it, if necessary, before it is transmitted. The message is transmitted only in response to a user pressing the appropriate key. This text input functionality resembles SMS messages, a functionality with which most users are accustomed. However, it differs from typical SMS functionality in that a second area 422 on the display 42 displays received text information. This enables a user to view both sides of a text conversation and is much more convenient and useful than the conversation record provided by typical SMS messaging.

Although the present invention has been described in detail, those skilled in the art should understand that they can make various changes, substitutions and alterations herein without departing from the spirit and scope of the invention in its broadest form.

## Claims

1. A mobile communications device, comprising:
a text input means coupled to said mobile communications device; and
a cellular text modem (CTM) integrated into said mobile communications device, said CTM including;
a transmitter adapted to convert input text into CTM signals transmittable over a speech channel of a mobile communications network, and
a receiver adapted to convert CTM signals received into received text and display said received text on a display means.

2. The mobile communications device as recited in Claim 1 wherein said text input means is a keypad or keyboard integrated into said mobile communications device.

3. The mobile communications device as recited in Claim 1 further comprising an interface for connecting an external keyboard to said mobile communications device.

4. The mobile communications device as recited in Claim 1 further comprising a coding means for character coding of said text data.

5. The mobile communications device as recited in Claim 4 wherein said coding means is adapted to convert characters into text telephone code.

6. The mobile communications device as recited in Claim 5 wherein said text telephone code is Baudot code.

7. The mobile communications device as recited in Claim 4 wherein said coding means is adapted to convert characters of text telephone code into characters displayable on said display means.

8. The mobile communications device as recited in Claim 7 wherein said text telephone code is Baudot code.

9. A communications system, comprising:
a mobile communications device having a cellular text modem (CTM) integrated therein, said CTM including a transmitter adapted to convert input text data into CTM signals transmittable over a speech channel and a receiver adapted to convert received CTM signals into received text for display on a display means; and
a mobile communications network, connectable to a public switched telephone network (PSTN), coupled to a converter for converting CTM signals into FSK modulated signals processable by a standard text telephone terminal (TTY).

10. A mobile communications system control device, comprising:
a digital storage medium containing a body of electronically readable control instructions, embodied in a sequence of software instructions, to enable a mobile communications device having a cellular text modem (CTM) integrated therein to convert text data into CTM signals for transmission over a speech channel and convert received CTM signals into received text; and
electronically readable execution instructions, embodied in a sequence of software instructions, contained in said digital storage medium to enable said control instructions.
